# FASCICULE DE BREVET EUROPEEN

(11) **EP 1 880 547 B1**
(45) Date de publication et mention de la délivrance du brevet: **08.08.2012**
(21) Numéro de dépôt: 06755176.2
(22) Date de dépôt: 12.05.2006
(51) Int. Cl.: H04H 60/23, H04H 60/50

(54) **MÉTHODE D'ACCÈS CONDITIONNEL LOCAL POUR ÉQUIPEMENTS MOBILES**
VERFAHREN ZUM LOKALEN, BEDINGTEN ZUGRIFF FÜR MOBILE GERÄTE
LOCAL CONDITIONAL ACCESS METHOD FOR MOBILE EQUIPMENT

(30) Priorité: 13.05.2005 EP 05291046
(43) Date de publication de la demande: 23.01.2008
(73) Titulaire: NAGRA FRANCE SAS, 75015 Paris (FR)
(72) Inventeur: WENDLING, Bertrand, F-78220 Viroflay (FR); LANDIER, Olivier, F-92370 Chaville (FR)
(74) Mandataire: Leman Consulting S.A.
(86) Numéro de dépôt international: PCT/EP2006/062265
(87) Numéro de publication internationale: WO 2006/122908

(56) Documents cités:
- WO-A-03/090465
- US-A1- 2003 005 435
- US-A1- 2003 181 160
- US-A1- 2005 100 162

## Description

### Domaine technique

L'invention concerne le domaine de l'accès conditionnel à un flux de données numériques diffusé par voie hertzienne et reçu par une pluralité d'équipements mobiles, tels que, par exemple, un téléphone portable, un assistant personnel PDA (Personal Digital Assistant), un récepteur portable de télévision numérique, un ordinateur portable.

Les données diffusées sont cryptées et ne peuvent être reçues en clair que par des équipements autorisés dont l'utilisateur a acquis les droits nécessaires. Ces droits, stockés dans un module de sécurité associé à l'équipement mobile, consistent en un ensemble de clés permettant de décrypter des mots de contrôles contenus dans des messages de contrôle ECM (Entitlement Control Message) diffusés dans le flux des données audio / vidéo.

Un module de sécurité est un dispositif réputé inviolable contenant diverses clés d'encryption/décryption, des informations servant à identifier un utilisateur sur un réseau et des données qui définissent des droits acquis par l'utilisateur pour la réception d'un contenu diffusé. Le module de sécurité peut se trouver sous différentes formes telles qu'une carte à puce amovible insérée dans un lecteur, un circuit intégré soudé sur une carte mère, une carte du type SIM (Subscriber Identity Module) que l'on rencontre dans la plupart des équipements mobiles.

### Arrière plan technique

Actuellement les équipements mobiles configurés pour la réception de programmes de télévision numérique sont basés sur des technologies normalisées telles que OMA (Open Mobile Alliance), DVB-H (Digital Video Broadcast, Handheld), ou DMB (Digital Multimedia Broadcasting) qui est en quelque sorte une extension à large bande de DAB (Digital Audio Broadcasting).

La technologie OMA met en oeuvre une solution complète unique pour un marché donné comme celui des téléphones portables où chaque équipement et les fournisseurs de contenu supportent la technologie OMA.

La technologie DVB a été conçue pour normaliser les décodeurs de télévision numériques (set top boxes) dans le but de réduire leurs coûts à grande échelle. Elle normalise les éléments intervenant au niveau de l'accès conditionnel au contenu diffusé dans le format MPEG-2 ou MPEG-4 pour la télévision mobile sur Internet. Ces éléments consistent en l'algorithme d'encryption du contenu diffusé, les messages de contrôle ECM contenant les clés de décryption ou mots de contrôle, les messages d'administration EMM contenant les droits des utilisateurs et l'interface entre le décodeur et le module de sécurité gérant l'accès conditionnel.

Dans le cas particulier de la télévision mobile DVB-H, la protection du contenu est développée par le groupe DVB-CBMS (Digital Vidéo Broadcasting - Convergence of Broadcast and Mobile Services).

La normalisation ne s'étend ni au contenu à valeur ajoutée des messages ECM et EMM, ni à la méthode de protection de ceux-ci. Chaque fournisseur d'accès conditionnel utilise sa propre structure de données et ses propres moyens de protection pour un même contenu diffusé. La technologie DVB offre donc de nombreuses possibilités de développement de la sécurité du contenu.

L'inconvénient d'une normalisation trop poussée comme celle de la technologie OMA réside en ce que des mesures de protection additionnelles sont restreintes surtout lorsque le système à accès conditionnel a été piraté par des tiers.

Dans la technologie DVB, la découverte d'un ou de plusieurs mots de contrôle contenu dans les messages de contrôle ECM permettent une décryption du flux sans devoir acquérir un abonnement ou payer les programmes à péage diffusés. Ce piratage cause un préjudice touchant aussi bien le fournisseur de contenu que celui de l'accès conditionnel.

Le document WO2004084555 décrit une méthode d'accès utilisant un téléphone mobile à des services d'information diffusés via un premier canal de communication à un dispositif de réception. Cette méthode comprend les étapes suivantes:
- stockage dans le téléphone mobile de données de contrôle d'accès permettant l'accès aux informations reçues par le dispositif de réception via le premier canal,
- établissement d'une communication entre le dispositif de réception et le téléphone mobile via un second canal local sans fil à faible portée du type Bluetooth ou WiFi (Wireless Fidelity) selon la norme IEEE 802.11,
- transmission des données de contrôle d'accès stockées dans le téléphone mobile au dispositif de réception via le second canal afin d'autoriser l'accès aux services d'information diffusé via le premier canal.

La réception de données de contrôle d'accès via un second canal indépendant de celui de diffusion des services à accès contrôlé permet certes d'améliorer leur protection contre le piratage, mais pas de limiter l'étendue des effets d'une éventuelle découverte de clés de décryption ou de moyens pour les produire.

US2005/100162A1 décrit une méthode dans laquelle une clé de service est utilisée pour encrypter tous les mots de contrôle associés avec un service DVB particulier, par exemple un canal privilégié ou un événement payant. Le mot de contrôle encrypté est ajouté à des messages de contrôle ECM qui sont ensuite transmis aux utilisateurs finaux via le réseau de diffusion. Le mot de contrôle encrypté contenu dans le message ECM doit être décrypté avant qu'il peut à son tour être utilisé pour décrypter le contenu encrypté du service DVB. De plus, la clé de service doit être transmise à l'utilisateur final de manière sécurisée en l'encryptant avec une clé d'utilisateur spécifique à un utilisateur final particulier. Cette clé de service encryptée est transmise à l'utilisateur final grâce à un système de gestion de droits numériques (DRM) via un réseau de téléphonie mobile. Typiquement la clé d'utilisateur est stockée dans une carte à puce protégée insérée dans le décodeur de l'utilisateur final et elle renouvelée par des messages d'administration EMM transmis par le diffuseur de services DVB.

US2003/005435A1 décrit un système à accès conditionnel comprenant un premier canal de communication diffusant un flux de données encrypté avec un flux de mots de contrôle et un second canal de communication séparé du premier canal transportant un flux de messages de contrôle. Ces derniers incluent des informations relatives au flux de mots de contrôle servant à décrypter le flux de données diffusé.

WO2003/090465A1 décrit une méthode de stockage d'un événement encrypté par un ou des mots de contrôle dans un récepteur qui consiste à former une quittance contenant des informations destinées au traitement de l'événement en mode reproduction. Cette quittance comprend une signature formée à partir de tout ou partie du message de contrôle et d'une clé secrète contenue dans l'unité de sécurité, cette clé secrète étant propre à chaque unité de sécurité. La quittance est telle que lors de la reproduction de l'événement stocké, elle est vérifiée prioritairement avant de vérifier les droits usuels dans l'unité de sécurité. La présence de cette quittance pour un message de contrôle donné permet ainsi d'ignorer les conditions d'accès contenues dans le message de contrôle.

US2003/181160A1 décrit un système de distribution à des abonnés de données multimédia composé d'un récepteur et d'un système d'authentification autorisant le récepteur à décrypter les données multimédia. Le système d'authentification comprend un serveur d'authentification et un système de localisation géographique de récepteurs pour déterminer les coordonnées d'un récepteur donné. Lorsque la position d'un récepteur est définie, le système d'authentification transmet un signal d'authentification à ce récepteur qui pourra décrypter les données multimédia diffusées. Le récepteur est ainsi authentifié selon sa position géographique par le biais d'un serveur d'authentification. Une fois authentifié, le récepteur est capable de décrypter des services cryptés.

### Description de l'invention

Le but de la présente invention est de pouvoir disposer de moyens de contre-mesures en cas de piratage indépendamment du type d'équipement mobile et à un coût relativement faible. Ces moyens agissent sur des éléments de protection qui ne sont pas concernés pas la normalisation et de préférence modulables par le fournisseur d'accès conditionnel.

Un autre but est de limiter les effets néfastes d'un éventuel piratage à un nombre aussi réduit que possible d'équipements mobiles.

Ces buts sont atteints par une méthode d'accès conditionnel à un flux de données numériques encryptées décrite par la revendication 1.

La méthode se distingue par l'utilisation d'un cryptogramme contenant par exemple des informations de localisation de l'équipement mobile. L'accès aux données du flux est ainsi autorisé seulement aux équipements mobiles se trouvant en un lieu géographique donné.

La découverte d'un mot de contrôle encryptant les données du flux aura ainsi des conséquences limitées aux équipements mobiles fonctionnant dans un quartier ou dans une ville sans s'étendre à tous les équipements du pays par exemple.

Selon un premier mode de réalisation, le flux diffusé se compose du contenu encrypté par des mots de contrôle et de messages de contrôles. Ces derniers contiennent chacun des mots de contrôle résultant de l'encryption des mots de contrôle originaux avec une clé locale. Chaque équipement mobile se connecte d'abord à un réseau mobile de type GSM (Global System for Mobile Communications), UMTS (Universal Mobile Télécommunications System) ou autre par lequel, il est localisé par le centre de gestion. L'équipement mobile reçoit de ce centre un cryptogramme contenant un identifiant local correspondant à celui de la cellule du réseau la plus proche de sa position géographique. Ce cryptogramme transmis au module de sécurité de l'équipement permet de déterminer une ou plusieurs clés locales qui sont définies comme des fonctions de l'identifiant local.

Plusieurs clés peuvent être générées à partir d'un cryptogramme permettant ainsi la décryption de mots de contrôle diffusés par des émetteurs voisins lorsque l'équipement se déplace d'un quartier à un autre par exemple.

L'équipement mobile dispose de cette fonction et/ou de ses paramètres via des messages d'administration EMM qu'il peut recevoir par exemple du centre de gestion lors sa connexion au réseau mobile GSM, UMTS. Une requête particulière par message court SMS, courriel ou appel téléphonique par exemple serait une alternative pour obtenir cette fonction.

Le cryptogramme peut être formé, par exemple, en effectuant une fonction XOR (OU exclusif) sur l'identifiant de la cellule, selon une réalisation simple. Selon une variante avec un degré de sécurité plus élevé, une fonction cryptographique utilisant un nombre aléatoire combiné avec l'identifiant de la cellule transmis par le réseau mobile peut être utilisée.

Selon une forme de réalisation permettant à l'équipement mobile de se déplacer d'une cellule à une autre, deux solutions sont possibles:
a) plusieurs cryptogrammes correspondant à des cellules environnantes peuvent être transmis à l'équipement mobile lors de sa connexion à la première cellule. Le module de sécurité peut ainsi déterminer les clés locales nécessaires pour décrypter des mots de contrôles à partir des cellules suivantes.
b) un ensemble de clés locales peuvent être déterminées à partir d'un seul cryptogramme reçu permettant la décryption de mots de contrôles à partir de cellules différentes. Ce cryptogramme contient par exemple une chaîne de clés locales correspondant à des cellules consécutives

Les messages de contrôle ECM diffusés dans le flux sont propres à une région donnée car ils contiennent des mots de contrôle qui ne peuvent être décryptés que par une clé locale qui est déterminée à partir de paramètres spécifiques à un réseau mobile d'un lieu donné.

Après décryption des messages ECM avec la clé de transmission, les mots de contrôle sont extraits. La clé locale, déterminée grâce au cryptogramme reçu, permet de retrouver les mots de contrôle originaux permettant de décrypter le contenu diffusé à condition de disposer des droits nécessaires dans le module de sécurité.

Ces droits sont obtenus à partir de messages d'administration EMM diffusés par l'intermédiaire d'un système à accès conditionnel CAS dont le serveur est connecté à celui de l'opérateur du réseau mobile GSM ou UMTS ou centre de gestion.

### Brève description des figures

L'invention sera mieux comprise grâce à la description détaillée qui va suivre et qui se réfère aux figures annexées données à titre d'exemples nullement limitatifs.
- La figure 1 illustre un schéma bloc d'un exemple de configuration avec deux émetteurs placés en des lieux distincts et pouvant être captés par un équipement mobile local.
- La figure 2 montre un schéma bloc de l'encryption du mot de contrôle d'un message de contrôle avec une clé locale et l'encryption d'un message de contrôle avec une clé de transmission.
- La figure 3 illustre un exemple schématisé de zones de diffusion des émetteurs du réseau diffusion et des cellules du réseau mobile à l'intérieur de ces zones de diffusion.

### Description détaillée de l'invention

Un flux de données numériques formant un contenu (C) encrypté avec des mots de contrôle (CW) sont diffusées avec des messages de contrôle ECM. Ces données numériques peuvent aussi bien comprendre des données audio/vidéo de programmes de télévision que des données correspondant à des applications pouvant être exploitées par un équipement mobile.

Un serveur d'un fournisseur d'accès conditionnel (CA) est connecté à un serveur d'un opérateur (OP) gérant un réseau de diffusion (NET1) et un réseau mobile (NET2). L'opérateur (OP) diffuse sur le réseau de diffusion (NET1) le contenu (C) encrypté avec des mots de contrôle CW ainsi que les messages ECM contenant un mot de contrôle CW' encrypté avec une clé locale (KL1, KL2). Cette clé locale est spécifique à l'emplacement géographique de l'émetteur (E1, E2) du réseau de diffusion tel qu'un quartier, une ville ou une région. De plus le fournisseur d'accès (CA) diffuse des messages d'administration EMM qui définissent les droits d'accès au contenu selon les acquisitions de l'utilisateur comme un abonnement ou un pré-paiement de programmes sélectionnés.

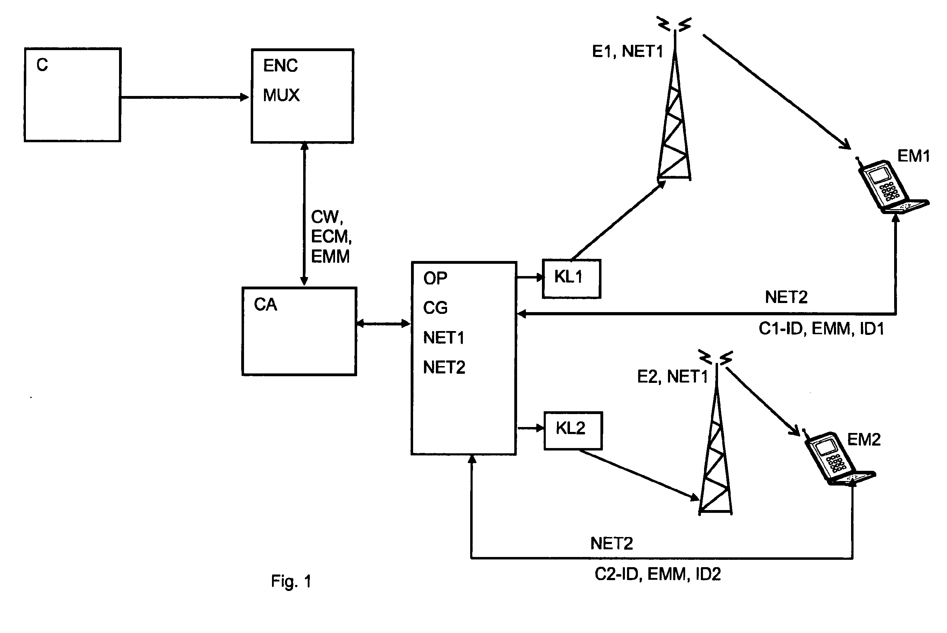

Les équipements mobiles EM1, EM2 se connectent respectivement au réseau de diffusion (NET1) et au réseau mobile (NET2). Le réseau de diffusion (NET1) fournit le contenu C encrypté tandis que le réseau mobile (NET2) fournit les paramètres nécessaires à la réception du contenu (C). Le réseau de diffusion (NET1) peut être par exemple du type DVB-H où le contenu est diffusé par voie hertzienne par un émetteur (E1, E2) local, le réseau mobile (NET2) sera du type GSM ou UMTS par exemple, permettant aussi les communications avec le centre de gestion (CG) de l'opérateur (OP), (voir figure 1).

Les émetteurs (E1, E2) du réseau de diffusion (NET1) diffusent les données numériques de façon unidirectionnelle vers les équipements mobiles (EM1, EM2) tandis que les données du réseau mobile (NET2) transitent de façon bidirectionnelle entre les équipements mobiles (EM1, EM2) et le centre de gestion (CG).

Les équipements mobiles (EM1, EM2) sont susceptibles de se déplacer d'une cellule du réseau mobile (NET2) vers une autre tout en conservant la possibilité de recevoir les données diffusées par l'un ou l'autre des émetteurs du réseau de diffusion (NET1).

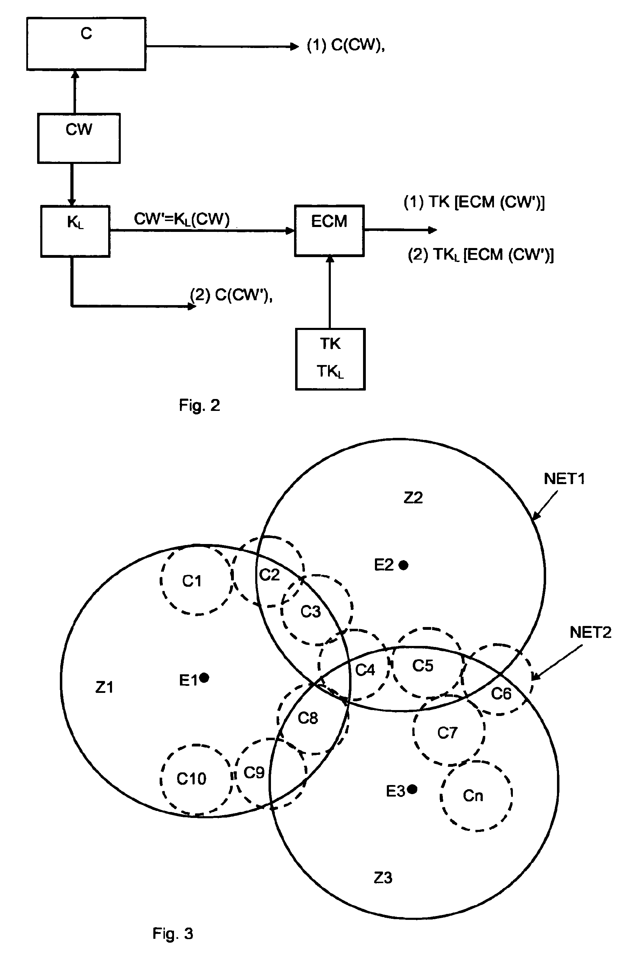

La figure 3 illustre une telle situation où des cellules (C1 - C10 - Cn) du réseau mobile (NET2) forment des mailles s'étendant sur une ou plusieurs zones de diffusion (Z1, Z2, Z3) des émetteurs (E1, E2, E3) du réseau (NET1). Lorsqu'un équipement mobile se déplace par exemple de la première zone (Z1) de diffusion vers la troisième zone (Z3) de diffusion, il peut recevoir un ensemble de clés correspondant aux cellules qu'il est susceptible de traverser, soit par exemple les clés des cellules C1 à C7 de l'exemple illustré. Ces clés locales permettent à l'équipement mobile de décrypter les mots de contrôle des messages ECM dans les zones (Z1) et (Z3) couvertes par les émetteurs (E1) et (E3). Selon, une variante, l'équipement mobile reçoit une clé locale chaque fois qu'il pénètre dans une cellule lors de son déplacement. Lorsque la cellule se trouve à cheval sur deux ou plusieurs zones de diffusion comme par exemple les cellules C2 à C6, l'équipement mobile peut recevoir autant de clés que la cellule recouvre de zones de diffusion.

Dans l'exemple de la figure 3, la cellule (C4) s'étend dans les trois zones (Z1, Z2, Z3) de diffusion. Dans ce cas, l'équipement mobile peut recevoir les trois clés locales lui permettant d'exploiter les données transmises par chacun des émetteurs (E1, E2, E3).

Les deux réseaux de diffusion et mobile (NET1, NET2) peuvent être du même type pour autant que la largeur de bande soit suffisante pour la transmission à la fois d'un contenu numérique et des échanges bidirectionnels de données. Par exemple, un réseau du type UMTS, EDGE (Enhanced Data Rates for Global Evolution) ou autre peut être envisagé.

Les ECM locaux ou plus précisément les mots de contrôle locaux CW' sont créés par le centre de gestion (CG) de l'opérateur (OP) mobile à partir des mots de contrôle originaux CW par encryption de ce mot avec une clé locale (KL1, KL2). Le nouveau mot de contrôle CW=KL1(CW) ou KL2(CW) ainsi obtenu est inséré dans les messages ECM diffusés par l'émetteur (E 1, E2) du réseau de diffusion (NET1) à destination d'équipements mobiles (EM1, EM2) connectés au réseau mobile (NET2). Ces équipements sont situés dans une cellule du réseau mobile (NET2) où ils peuvent recevoir le cryptogramme nécessaire à l'obtention de la clé locale (KL1, KL2). (voir figure 2, variante (1))

Il est à noter que les messages de contrôle ECM diffusés sont encryptés avec une clé de transmission (TK) mise à disposition des équipements mobiles (EM 1, EM2) au moyen de messages d'administration EMM délivrés par le fournisseur d'accès (CA) via le centre de gestion (CG).

Selon un premier mode de réalisation, la clé locale (KL1, KL2) est déterminée par l'équipement mobile lors de sa connexion au réseau mobile (NET2) au moyen de données de localisation ou plus précisément d'un identifiant d'une cellule (C1-ID, C2-ID) de ce réseau transmis par le centre de gestion (CG). La clé locale peut être déterminée de plusieurs manières:
- calcul effectué au moyen d'une opération ou une fonction mathématique relativement simple comme par exemple XOR (OU exclusif) ou à partir d'un nombre aléatoire transmis par le centre de gestion.
- combinaison avec une clé propre au réseau mobile ou à un noeud de celui-ci fournie soit lors de la connexion de l'équipement mobile avec le centre de gestion, soit en réponse à une requête particulière par message court SMS par exemple.
- le cryptogramme transmis peut constituer la clé locale pouvant être exploitée telle quelle sans calcul intermédiaire par l'équipement mobile pour décrypter les mots de contrôle locaux.

En résumé, cette clé locale est nécessaire pour décrypter les mots de contrôle CW' contenu dans les ECM locaux diffusés dans le flux de données numériques afin d'obtenir les mots de contrôle CW originaux encryptant effectivement le contenu diffusé.

Au-delà de la distribution de cryptogrammes aux équipements mobiles reconnus localement, le centre de gestion (CG) vérifie les requêtes sur l'ensemble du réseau mobile (NET2) afin de détecter si un même module de sécurité sollicite un cryptogramme depuis plusieurs cellules du réseau. Cette situation se présente lorsqu'un module de sécurité a été cloné, distribué et utilisé en des lieux différents. Dans un tel cas, le cryptogramme ou la clé demandée sera refusé et le module de sécurité considéré comme invalide lors de futures tentatives de connexion. La vérification est effectuée sur la base de l'identificateur du module de sécurité (ID1, ID2) transmis par l'équipement mobile (EM1, EM2) au centre de gestion (CG) lors de la requête du cryptogramme. L'exclusion d'un module de sécurité cloné peut aussi être effectuée par l'intermédiaire des messages d'administration (EMM) que seul un équipement mobile à un endroit donné et reconnu par le centre de gestion peut recevoir. Un autre équipement mobile dans une autre cellule avec un même module de sécurité ne recevra donc pas ce message porteur des droits d'accès aux données du réseau de diffusion.

Selon une variante l'équipement mobile est muni d'un système global de positionnement du type GPS (Global Positioning System) qui détermine les coordonnées correspondant à sa position géographique. Ces données servent ensuite à la détermination de la clé locale à partir du cryptogramme reçu.

Selon un second mode de réalisation, la clé de transmission (TK) encryptant les messages de contrôle ECM peut aussi dépendre de l'émetteur de diffusion. Cette configuration procure ainsi deux niveaux de sécurité à franchir pour accéder au contenu diffusé dans le flux. Lorsque l'équipement mobile se connecte au réseau mobile, il reçoit un message d'administration EMM contenant la clé de transmission locale (TK_{L}) ou des éléments aptes à la déterminer (paramètres, fonctions de calcul). Le message EMM n'est en général transmis que si la clé de transmission locale (TK_{L}) n'est pas disponible dans le module de sécurité de l'équipement mobile ou après un changement de clé. En effet, la validité de cette dernière peut par exemple être limitée à une certaine période pour un émetteur donné.

Après avoir obtenu cette clé (TK_{L}) permettant de décrypter les messages de contrôle ECM, l'équipement mobile détermine la ou les clés locales (KL1, KL2) nécessaires à la décryption des mots de contrôle CW' contenu dans les messages ECM. Ces clés locales (KL1, KL2) sont déterminées selon les procédés décrits plus haut.

Les informations de localisation comme les identifiants de cellule de réseau ou les coordonnées de position des équipements mobiles peuvent être exploitées de manière à empêcher l'accès à certains contenus diffusés à des équipements mobiles se trouvant dans une région donnée. En effet les ECM diffusés et associés à un contenu prédéterminé contiennent un mot de contrôle encrypté avec une clé qui ne peut pas être obtenue à partir de certains identifiants de cellule car, par exemple, la fonction de calcul de la clé ne possède pas les paramètres adéquats. Autrement dit, cette restriction permet d'occulter certains lieux à la réception du contenu diffusé.

Selon une configuration, une clé de réseau ou de noeud peut être spécifique à un canal diffusé. Lorsqu'un équipement mobile se trouve à un lieu donné, l'identifiant local issu de la clé de noeud ou la clé de noeud elle-même peut ne pas être transmis par le centre de gestion, ce qui interdit la réception de ce canal à l'endroit du noeud en question.

Selon une autre configuration, (voir figure 2, variante (2)) le ou les opérateurs de diffusion locale décryptent le flux à l'aide du mot de contrôle original CW puis le réencryptent avec des mots de contrôle locaux (CW'1, CW'2). Les émetteurs locaux (E1, E2) diffusent donc chacun un flux encrypté avec des mots de contrôle (CW'1, CW'2) et des messages ECM locaux contenant ces mots de contrôle (CW'1, CW'2) caractéristiques à chaque émetteur (E1, E2). L'équipement mobile d'un utilisateur se connecte au réseau mobile pour recevoir un message d'administration EMM contenant au moins une clé de transmission (TK_{L}) locale permettant de décrypter les messages ECM locaux afin d'en extraire les mots de contrôle (CW'1, CW'2).

Le message d'administration EMM peut être reçu soit automatiquement après l'établissement d'une connexion reconnue par le réseau mobile (NET2), soit à la demande au moyen d'un message court SMS par exemple.

Bien entendu, il est aussi envisageable que l'équipement mobile reçoit un ensemble de clés de transmission locales (TK_{L}) dans le message EMM lors de sa connexion à une cellule du réseau mobile (NET2). Cet ensemble permettrait de décrypter les messages ECM provenant d'émetteurs voisins lorsque l'équipement mobile se déplace d'une zone de diffusion à une autre sans solliciter un message EMM à chaque cellule.

## Revendications

1. Méthode d'accès conditionnel à un flux de données numériques encryptées avec au moins un premier mot de contrôle CW et diffusé via un émetteur (E1, E2) d'un réseau de diffusion unidirectionnel (NET1) à au moins un équipement mobile (EM1, EM2) incluant un module de sécurité, l'équipement mobile (EM1, EM2) étant également connecté via un réseau de communication mobile bidirectionnel (NET2) à un centre de gestion (CG), ledit flux de données numériques diffusé contenant des messages de contrôle ECM encryptés avec une clé de transmission TK et comprenant un second mot de contrôle CW' obtenu par l'encryption du premier mot de contrôle CW avec une clé locale KL, ladite méthode est **caractérisée en ce qu'**elle comprend les étapes suivantes:
- transmission d'une requête par l'équipement mobile (EM1, EM2) au centre de gestion (CG) via le réseau mobile bidirectionnel (NET2), d'au moins un cryptogramme, ladite requête comprenant un identificateur du module de sécurité,
- vérification de la requête par le centre de gestion (CG) en déterminant la validité de l'identificateur (ID1, ID2) du module de sécurité par une présence unique dudit identificateur (ID1, ID2) sur le réseau bidirectionnel (NET2), transmission du cryptogramme à l'équipement mobile (EM1, EM2) lorsque ledit identificateur (ID1, ID2) est valide,
- réception par l'équipement mobile (EM1, EM2) du cryptogramme via le réseau mobile bidirectionnel (NET2),
- détermination d'au moins une clé locale (KL) à partir du cryptogramme reçu, ladite clé locale (KL) étant spécifique au lieu géographique où se situe l'émetteur (E1, E2) du réseau de diffusion unidirectionnel (NET1) capté par l'équipement mobile (EM1, EM2),
- réception d'un message de contrôle ECM via le réseau de diffusion unidirectionnel (NET1),
- décryption dudit message ECM avec la clé de transmission (TK) et obtention du second mot de contrôle CW',
- décryption du second mot de contrôle CW' avec la clé locale (KL) et obtention du premier mot de contrôle CW,
- décryption des données du flux diffusé par l'émetteur (E1, E2) avec le premier mot contrôle CW.

2. Méthode selon la revendication 1, **caractérisée en ce que** le cryptogramme comprend un identifiant (C1-ID, C2-ID) d'une cellule du réseau mobile bidirectionnel (NET2) auquel ledit équipement mobile (EM1, EM2) est connecté.

3. Méthode selon la revendication 2, **caractérisée en ce que** le cryptogramme est transmis par le centre de gestion (CG) via le réseau mobile bidirectionnel (NET2) lors de la connexion de l'équipement mobile (EM1, EM2) audit réseau mobile bidirectionnel (NET2).

4. Méthode selon la revendication 1, **caractérisée en ce que** la clé locale (KL) est obtenue à partir du cryptogramme et des coordonnées géographiques correspondant à la position de l'équipement mobile (EM1, EM2).

5. Méthode selon la revendication 4, **caractérisée en ce que** la position de l'équipement mobile (EM1, EM2) est déterminée par un dispositif de positionnement global associé audit équipement mobile (EM1, EM2).

6. Méthode selon la revendication 1, **caractérisée en ce que** la clé locale (KL) est déterminée au moyen d'une fonction mathématique effectuée sur le cryptogramme reçu du centre de gestion (CG), ladite fonction étant obtenue au moyen de messages d'administration EMM délivrés par un fournisseur d'accès conditionnel via ledit centre de gestion (CG).

7. Méthode selon la revendication 2, **caractérisée en ce que** la clé locale (KL) est déterminée au moyen d'une combinaison de l'identifiant (C1-ID, C2-ID) d'une cellule du réseau mobile bidirectionnel (NET2) avec une clé de noeud dudit réseau auquel l'équipement mobile (EM1, EM2) est connecté.

8. Méthode selon la revendication 1, **caractérisée en ce que** la clé locale (KL) est constituée par le cryptogramme reçu par l'équipement mobile (EM1, EM2).

9. Méthode selon la revendication 1, **caractérisée en ce que** la clé de transmission (TK) encryptant les messages de contrôle ECM est propre à l'émetteur (E1, E2) du réseau de diffusion unidirectionnel (NET1).

10. Méthode selon la revendication 9, **caractérisée en ce qu'**elle comporte une étape supplémentaire de réception d'un message d'administration EMM suivie d'une étape d'extraction de la clé de transmission (TK) ou d'éléments aptes à déterminer ladite clé de transmission (TK).

11. Méthode selon la revendication 1, où chaque émetteur (E1, E2) du réseau de diffusion (NET1) diffuse un flux de données numériques encryptées avec des mots de contrôle (CW'1, CW'2) propres audit émetteur (E1, E2) et des messages de contrôle ECM encryptés avec une clé de transmission locale (TK_{L}) contenant lesdits mots de contrôle (CW'1, CW'2) **caractérisée en ce que** l'équipement mobile (EM1, EM2) reçoit un message d'administration EMM, via le réseau mobile bidirectionnel (NET2), contenant au moins une clé de transmission locale TK_{L}, décrypte les messages de contrôle ECM avec la clé de transmission locale TK_{L} reçue, extrait les mots de contrôle (CW'1, CW'2) et décrypte les données numériques du flux diffusé.

## Claims

1. Method for conditional access to a digital data stream encrypted with at least one first control word (CW) and broadcast via an emitter (E1, E2) of a unidirectional broadcasting network (NET1) to at least one mobile equipment (EM1, EM2) including a security module, the mobile equipment (EM1, EM2) also being connected via a bidirectional mobile communication network (NET2) to a management center (CG), said broadcast digital data stream containing control messages (ECM) encrypted with a transmission key (TK) and comprising a second control word (CW') obtained by the encryption of the first control word (CW) with a local key (KL), the method is **characterized by** the steps of:
- transmitting a request, by the mobile equipment (EM1, EM2), to the managing center (CG), via the bidirectional mobile network (NET2), of at least one cryptogram, said request comprising an identifier of the security module,
- verifying the request by the managing center (CG) by determining validity of the identifier (ID1, ID2) of the security module by a unique presence of said identifier (ID1, ID2) on the bidirectional network (NET2), transmitting the cryptogram to the mobile equipment (EM1, EM2) when said identifier (ID1, ID2) is valid,
- receiving, by the mobile equipment (EM1, EM2), the cryptogram via the bidirectional network (NET2),
- determining at least one local key (KL) from the received cryptogram, said local key (KL) being specific to the geographic location of the emitter (E1, E2) of the unidirectional broadcasting network (NET1) captured by the mobile equipment (EM1, EM2),
- receiving a control message (ECM) via the unidirectional broadcasting network (NET1),
- decrypting said (ECM) message with the transmission key (TK) and obtaining the second control word (CW'),
- decrypting the second control word (CW') with the local key (KL) and obtaining the first control word (CW),
- decrypting the data of the digital data stream broadcast by the emitter (E1, E2) with the first control word (CW).

2. Method according to claim 1, **characterized in that** the cryptogram further includes an identifier (C1-ID, C2-ID) of a cell of the bidirectional mobile network (NET2) to which said mobile equipment (EM1, EM2) is connected.

3. Method according to claim 2, **characterized in that** the cryptogram is transmitted by the management center (CG), via the bidirectional mobile network (NET2), when the mobile equipment (EM1, EM2) connects to said bidirectional mobile network (NET2).

4. Method according to claim 1, **characterized in that** the local key (KL) is obtained from the cryptogram and the geographical coordinates related to the position of the mobile equipment (EM1, EM2).

5. Method according to claim 4, **characterized in that** the position of the mobile equipment (EM1, EM2) is determined by a global positioning device associated to said mobile equipment (EM1, EM2).

6. Method according to claim 1, **characterized in that** the local key (KL) is determined by means of a mathematical function carried out on the cryptogram received from the management center (CG), said function being obtained by means of management messages (EMM) delivered by a conditional access supplier via said management center (CG).

7. Method according to claim 2, **characterized in that** the local key (KL) is determined by means of a combination of the identifier (C1-ID, C2-ID) of a cell of the bidirectional mobile network (NET2) with a node key of said mobile network (NET2) to which the mobile equipment (EM1, EM2) is connected.

8. Method according to claim 1, **characterized in that** the local key (KL) is made up of the cryptogram received by the mobile equipment (EM1, EM2).

9. Method according to claim 1, **characterized in that** the transmission key (TK) encrypting the control messages (ECM) is specific to the emitter (E1, E2) of the unidirectional broadcasting network (NET1).

10. Method according to claim 9, **characterized in that** it includes a supplementary step of receiving a management message (EMM) followed by a step of extracting the transmission key (TK) or elements suited for determining said transmission key (TK).

11. Method according to claim 1, where each emitter (E1, E2) of the broadcast network (NET1) broadcasts a digital data stream encrypted with control words (CW'1, CW'2) specific to said emitter (E1, E2) and control messages (ECM) encrypted with a local transmission key (TK_{L}) containing said control words (CW'1, CW'2), **characterized in that** the mobile equipment (EM1, EM2) receives a management message (EMM), via the bidirectional mobile network (NET2), containing at least one local transmission key (TK_{L}), decrypts the control messages (ECM) with the received transmission key (TK_{L}), extracts the control words (CW'1, CW'2) and decrypts the digital data of the broadcast stream.

## Patentansprüche

1. Verfahren zur Kontrolle des Zugangs zu einem verschlüsselten digitalen Datenfluss mit mindestens einem ersten Kontrollwort CW, ausgestrahlt über einen Sender (E1 E2) eines unidirektionalen Sendernetzes (NET1) zu mindestens einem Mobilgerät (EM1 EM2), mit einem Sicherheitsmodul, wobei das Mobilgerät (EM1 EM2) auch über ein bidirektionales bewegliches Kommunikationsnetz (NET2) mit einem Verwaltungszentrum (CG) verbunden ist, wobei besagter ausgestrahlter digitaler Datenfluss ECM-Kontrollnachrichten enthält, die mit einem Übertragungsschlüssel TK verschlüsselt sind, und mit einem zweiten Kontrollwort CW', erhalten durch die Chiffrierung des ersten Kontrollwortes CW mit einem örtlichen Schlüssel KL, wobei das Verfahren **dadurch gekennzeichnet ist, dass** es die folgenden Schritte umfasst:
- Übertragung einer Anfrage des Mobilgeräts (EM1 EM2) nach mindestens einem Kryptogramm an das Verwaltungszentrum (CG) über das bidirektionale Mobilnetz (NET2), wobei die Anfrage einen Identifikator des Sicherheitsmoduls umfasst,
- Überprüfung der Anfrage durch das Verwaltungszentrum (CG) durch Bestimmung der Gültigkeit des Identifikators (ID1 1D2) des Sicherheitsmoduls durch einmaliges Vorhandensein des genannten Identifikators (ID1 ID2) im bidirektionalen Netz (NET2), Übertragung des Kryptogramms an das Mobilgerät (EM1 EM2), falls besagter Identifikator (ID1, ID2) gültig ist,
- Empfang des Kryptogramms durch das Mobilgerät (EM1 EM2) über das bidirektionale Mobilnetz (NET2),
- Ermittlung mindestens eines lokalen Schlüssels (KL) ausgehend von dem empfangenen Kryptogramm, wobei der lokale Schlüssel (KL) spezifisch für den geographischen Ort ist, wo sich der Sender (E1 E2) des unidirektionalen Sendernetzes (NET1) befindet. der vom Mobilgerät (EM1 EM2) empfangen wird,
- Empfang einer Kontrollnachricht ECM über das unidirektionale Sendernetz (NET1),
- Entschlüsselung der genannten Nachricht ECM mit dem Übertragungsschlüssel (TK) und Erlangung des zweiten Kontrollwortes CW',
- Entschlüsselung des zweiten Kontrollwortes CW' mit dem lokalen Schlüssel (KL) und Erlangung des ersten Kontrollwortes CW,
- Entschlüsselung der Daten des Stromes des Senders (E1 E2) mit dem ersten Kontrollwort CW.

2. Verfahren nach Anspruch 1, **gekennzeichnet dadurch, dass** das Kryptogramm eine Identifizierung (C1-ID; C2-1D) einer Zelle des bidirektionalen Mobilnetzes (NET2) umfasst, mit dem das Mobilgerät (EM1 EM2) verbunden ist.

3. Verfahren nach Anspruch 2, **gekennzeichnet dadurch, dass** das Kryptogramm vom Verwaltungszentrum (CG) über das bidirektionale Mobilnetz (NET2) beim Anschluss des Mobilgeräts (EM1 EM2) an das bidirektionale Mobilnetz (NET2) übertragen wird.

4. Verfahren nach Anspruch 1, **gekennzeichnet dadurch, dass** der lokale Schlüssel (KL) ausgehend von dem Kryptogramm und den geographischen Koordinaten erhalten wird, die der Position des Mobilgeräts (EM1, EM2) entsprechen.

5. Verfahren nach Anspruch 4, **gekennzeichnet dadurch dass** die Position des Mobilgeräts (EM1 EM2) von einer globalen Positionierungsvorrichtung bestimmt wird, die mit dem Mobilgerät (EM1, EM2) verbunden ist.

6. Verfahren nach Anspruch 1, **gekennzeichnet dadurch, dass** der lokale Schlüssel (KL) mittels einer mathematischen Funktion bestimmt wird, die auf dem vom Verwaltungszentrum (CG) empfangenen Kryptogramm durchgeführt wird, wobei die Funktion mittels Verwaltungsmitteilungen EMM erhalten wird, die von einem zugangskontrollierten Lieferanten über das Verwaltungszentrum (CG) geliefert werden.

7. Verfahren nach Anspruch 2, **gekennzeichnet dadurch dass** der lokale Schlüssel (KL) mittels einer Kombination zwischen der Identifizierung (C1-ID; C2-ID) einer Zelle des bidirektionalen Mobilnetzes (NET2) und einem Knotenschlüssel des genannten Netzes bestimmt wird, mit dem das Mobilgerät (EM1 EM2) verbunden ist.

8. Verfahren nach Anspruch 1, **gekennzeichnet dadurch, dass** der lokale Schlüssel (KL) aus dem vom Mobilgerät (EM1, EM2) empfangenen Kryptogramm besteht.

9. Verfahren nach Anspruch 1, **gekennzeichnet dadurch, dass** der Übertragungsschlüssel (TK), der die Kontrollnachrichten ECM verschlüsselt, zum Sender (E1 E2) des unidirektionalen Sendernetzes (NET1) gehört.

10. Verfahren nach Anspruch 9, **dadurch gekennzeichnet, dass** es eine zusätzliche Empfangphase einer Verwaltungsnachricht EMM umfasst, gefolgt von einer Extraktionsphase des Übertragungsschlüssels (TK) oder von Elementen, die besagten Übertragungsschlüssel (TK) bestimmen können.

11. Verfahren nach Anspruch 1, wobei jeder Sender (E1 E2) des Sendernetzes (NET1) einen verschlüsselten digitalen Datenfluss ausstrahlt mit Kontrollwörtern (CW'1, CW'2), die zu dem Sender (E1 E2) gehören, und Kontrollnachrichten ECM, die mit einem lokalen Übertragungsschlüssel (TK_{L}) verschlüsselt sind, der besagte Kontrollwörter (CW'1, CW'2) enthält, **gekennzeichnet dadurch, dass** das Mobilgerät (EM1 EM2) eine Verwaltungsnachricht EMM über das bidirektionale Mobilnetz (NET2) empfängt, die mindestens einen lokalen Übertragungsschlüssel TK_{L} enthält, dass es die Kontrollnachrichten ECM mit dem empfangenen lokalen Übertragungsschlüssel TK_{L} entschlüsselt, die Kontrollwörter (CW'1 CW'2) herauszieht und die digitalen Daten des ausgestrahlten Stroms entschlüsselt.
